# EUROPEAN PATENT APPLICATION

(11) **EP 4 060 624 A1**
(43) Date of publication of application: **21.09.2022**
(21) Application number: 22161966.1
(22) Date of filing: 14.03.2022
(51) Int. Cl.: G06V 10/774, G06V 10/778, G06V 40/16, G06V 40/20, G06V 10/80

(54) **LEARNING APPARATUS, LEARNING SYSTEM, NONVERBAL INFORMATION LEARNING METHOD, AND CARRIER MEANS**

(30) Priority: 19.03.2021 JP 2021045560
(71) Applicant: Ricoh Company, Ltd., Tokyo 143-8555 (JP)
(72) Inventor: TANAKA, Satomi, Tokyo, 143-8555 (JP); HARASHIMA, Seigo, Tokyo, 143-8555 (JP); SHIMA, Tomohiro, Tokyo, 143-8555 (JP); HIRANO, Shigenobu, Tokyo, 143-8555 (JP)
(74) Representative: Marks & Clerk LLP

(57) **Abstract**

A learning apparatus (10) performs machine learning using line-of-sight information of an annotator. The learning apparatus includes input receiving means (13) for receiving an input of first label information to be given to a facial expression image indicating a face of a person. The learning apparatus includes inference means (18) for estimating second label information to be given to the facial expression image based on an interpolated image generated using the facial expression image and line-of-sight information indicating a direction of a line of sight of the annotator, the direction being detected at a time when the input is received. The learning apparatus includes loss calculation means (19) for calculating a difference between the first label information of which the input is received and the estimated second label information. The learning apparatus includes optimization means (20) for updating a parameter used for processing by the inference means (18) based on the calculated difference.

## Description

### BACKGROUND

### Technical Field

The present disclosure relates to a learning apparatus, a learning system, a nonverbal information learning method, and carrier means.

### Related Art

In recent years, the development of deep learning enables accurate recognition of nonverbal information such as a person's line of sight and facial expression from a video image in real time. This technology is applied to various applications such as automatic analysis of surveillance camera images and health condition monitoring. Further, in recent years, a nonverbal information conversion technology developed in conjunction with the nonverbal information recognition technology is attracting attention. These techniques enable to give a desired impression to a partner in a conversation using a video call, for example.

Further, in such deep learning technologies, the importance of improving the efficiency of annotation is increasing so that label information is efficiently added to a large-scale data set. For example, Japanese Unexamined Patent Application Publication No. 2019-192207 discloses a method of extracting a region to which a user pays attention in a video by using line-of-sight data representing a line of sight of the user when annotating label information to be paired with the video.

However, applying the method using only the line-of-sight region of the annotator to tasks such as object recognition and facial expression recognition is not appropriate, because recognition of a peripheral region has significances in addition to recognition of a central region. Accordingly, in the related art, there is a room for improving efficiency of annotation.

### SUMMARY

In one aspect of the present invention, a learning apparatus performs machine learning using line-of-sight information of an annotator. The learning apparatus includes input receiving means for receiving an input of first label information to be given to a facial expression image indicating a face of a person. The learning apparatus includes inference means for estimating second label information to be given to the facial expression image based on an interpolated image generated using the facial expression image and line-of-sight information indicating a direction of a line of sight of the annotator, the direction being detected at a time when the input is received. The learning apparatus includes loss calculation means for calculating a difference between the first label information of which the input is received and the estimated second label information. The learning apparatus includes optimization means for updating a parameter used for processing by the inference means based on the calculated difference.

In another aspect of the present invention, a learning system performs machine learning using line-of-sight information of an annotator. The learning system includes the learning apparatus of the above aspect, and storage means for storing the facial expression image and the first label information as one data set.

In another aspect of the present invention, a nonverbal information learning method includes receiving an input of first label information to be given to a facial expression image indicating a face of a person. The method includes estimating second label information to be given to the facial expression image based on an interpolated image generated using the facial expression image and line-of-sight information indicating a direction of a line of sight of an annotator, the direction being detected at a time when the input is received. The method includes calculating a difference between the first label information of which the input is received and the estimated second label information. The method includes updating a parameter used for processing by the estimating based on the calculated difference.

In another aspect of the present invention, carrier means carrying computer readable codes for controlling a computer system to carry out a nonverbal information learning method of the above aspect is provided.

According to one aspect of the present invention, efficient annotation is implemented based on a line-of-sight region and a peripheral region in an input image by using line-of-sight information of an annotator.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a diagram illustrating an example of an overall configuration of a nonverbal information processing system, according to an embodiment of the present invention;
FIG. 2 is a diagram illustrating an example of a configuration of a learning system, according to an embodiment of the present invention;
FIG. 3 is a block diagram illustrating an example of a hardware configuration of a computer, according to an embodiment of the present invention;
FIG. 4 is a block diagram illustrating an example of a functional configuration of a learning apparatus, according to an embodiment of the present invention;
FIG. 5 is a schematic diagram illustrating an example of a learning system according to the first embodiment;
FIG. 6 is a flowchart illustrating an example of an operation of creating a data set, according to an embodiment of the present invention;
FIG. 7 is a flowchart illustrating an example of an operation of learning nonverbal information, according to an embodiment of the present invention;
FIG. 8 is a schematic diagram illustrating an example of an operation performed by an interpolation unit, according to an embodiment of the present invention;
FIG. 9 is a schematic diagram illustrating an example of pre-learning by a variational auto-encoder (VAE), according to an embodiment of the present invention;
FIG. 10 is a schematic diagram illustrating an example of a structure of an inference unit, according to an embodiment of the present invention;
FIG. 11 is a schematic diagram illustrating an example of update processing of a parameter used for processing by an inference unit, according to an embodiment of the present invention;
FIG. 12 is a schematic diagram illustrating an example of a learning system according to the second embodiment;
FIG. 13 is a schematic diagram illustrating an example of an operation performed by an interpolation unit, according to the second embodiment;
FIG. 14 is a schematic diagram illustrating an example of a learning system, according to the third embodiment;
FIG. 15 is a flowchart illustrating an example of an operation of learning nonverbal information, according to the third embodiment;
FIG. 16 is a schematic diagram illustrating an example of an operation performed by an inference unit, according to the third embodiment; and
FIG. 17 is a schematic diagram illustrating an example of a structure of an inference unit, according to the third embodiment.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments of the present invention are described with reference to the drawings. In the description of the drawings, the same elements are denoted by the same reference numerals, and redundant descriptions thereof are omitted.

### Embodiments:

### Overview of Nonverbal Information Processing System:

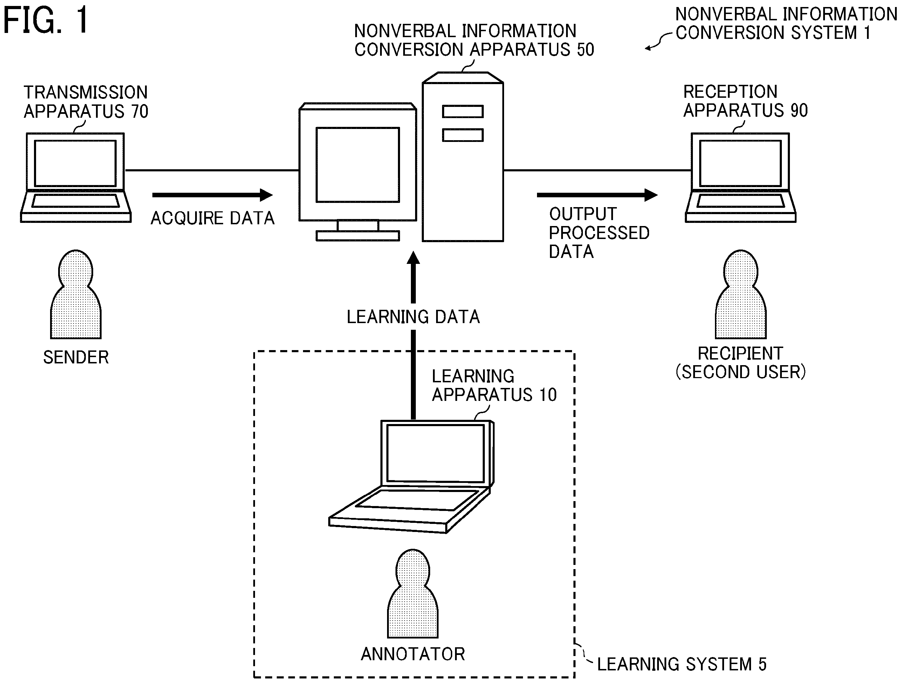

Referring to FIG. 1, an overview of a nonverbal information processing system 1 is described according to an embodiment. FIG. 1 is a diagram illustrating an example of an overall configuration of the nonverbal information processing system 1. The nonverbal information processing system 1 illustrated in FIG. 1 is a system that processes nonverbal information exchanged in dialogue communication using video communication, for example.

As illustrated in FIG. 1, the nonverbal information processing system 1 includes a nonverbal information conversion apparatus 50 that converts nonverbal information, a transmission apparatus 70 used by a sender of the nonverbal information, and a reception apparatus 90 used by a recipient of the nonverbal information. The nonverbal information conversion apparatus 50, the transmission apparatus 70, and the reception apparatus 90 included in the nonverbal information processing system 1 are communicable with each other through a communication network. The communication network includes the Internet, a mobile communication network, and a local area network (LAN), for example. In another example, the communication network includes a network by not only wired communications but also a network by wireless communications such as 3rd generation (3G), 4th generation (4G), 5th generation (5G), Wireless Fidelity^{®} (Wi-Fi), Worldwide Interoperability for Microwave Access (WiMAX) or Long Term Evolution (LTE).

The nonverbal information conversion apparatus 50 is a computer that converts nonverbal information so that an intention of the sender is intelligibly communicated to the recipient. The nonverbal information conversion apparatus 50 acquires data including nonverbal information of the sender, converts the nonverbal information so that an intention of the sender is intelligibly communicated to the recipient, and outputs processed data obtained by performing conversion of the nonverbal information to the acquired data.

In the disclosure, the nonverbal information includes a feature amount such as a user's line of sight, a user's facial expression, a posture of a user's upper limb, a shape of a user's hand, a shape or a posture of a user's arm or foot, or a tone or intonation of user's voice. The intention of the sender includes one or more of a condition of the sender (e.g., pleasant, concentrated, or active), an emotion of the sender (e.g., happy, angry, sad, pleasure, composed, or disgusted), and will of the sender (e.g., instruct, deny, or request) that the sender wants to communicate to the recipient.

In one example, the nonverbal information conversion apparatus 50 is implemented by a single computer. In another example, the nonverbal information conversion apparatus 50 is implemented by a plurality of computers. In one example, the nonverbal information conversion apparatus 50 is implemented by a computer residing in a cloud environment. In another example, the nonverbal information conversion apparatus 50 is implemented by a computer existing residing in an on-premises environment.

The transmission apparatus 70 is a computer such as a laptop computer used by the sender in dialogue communication. The reception apparatus 90 is a computer such as a laptop computer used by the recipient in dialog communication. The transmission apparatus 70 transmits, to the nonverbal information conversion apparatus 50, video data obtained by capturing the sender from the front, for example. The reception apparatus 90 controls a display to display video in which the sender appears, based on video data (conversion data) converted by the nonverbal information conversion apparatus 50. The laptop computer is merely one example of each of the transmission apparatus 70 and the reception apparatus 90. In another example, each of the transmission apparatus 70 and the reception apparatus 90 is implemented by a smartphone, a tablet terminal, a wearable terminal, or desktop personal computer (PC). Although FIG. 1 illustrates an example of dialogue communication is performed between two persons, the nonverbal information processing system 1 is also applicable to dialogue communication between three or more persons. In still another example in dialogue communication, each of the sender and the recipient serves as both the sender and the recipient.

The nonverbal information processing system 1 further includes a learning system 5 including a learning apparatus 10 used by an annotator. The learning apparatus 10 is a computer for performing machine learning of training data used for conversion of the nonverbal information.

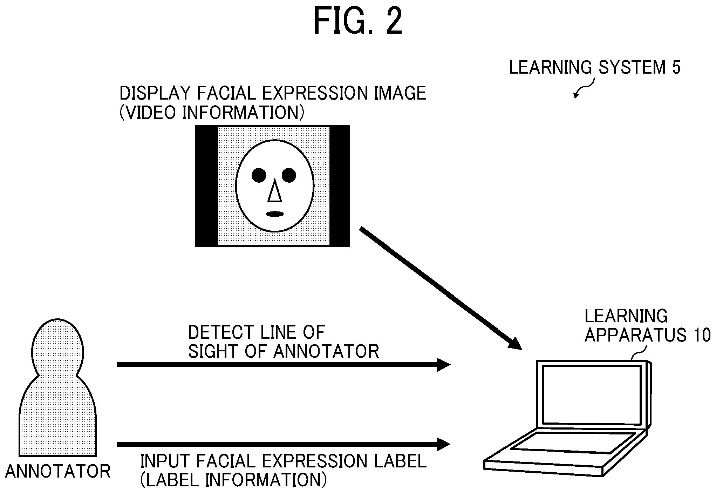

FIG. 2 is a diagram illustrating an example of a configuration of the learning system 5. FIG. 2 illustrates an example in which the learning system 5 executes a task of inputting a corresponding facial expression label for video information including a facial expression image of a person displayed on the learning apparatus 10. The facial expression label represents any of the six basic emotions "happy, angry, sad, surprised, disgusted, and composed". Further, the facial expression label is label information representing the six basic emotions indicated by a one-hot vector.

The annotator looks at a facial expression image displayed on the learning apparatus 10 and inputs a corresponding facial expression label (label information). Further, the learning apparatus 10 detects line-of-sight information of the annotator at the time of the input of the facial expression label, and stores the detected line-of-sight information in addition to the facial expression image and the facial expression label. The learning apparatus 10 deals with data of the facial expression image, the facial expression label, and the line-of-sight information as one set. The learning apparatus 10 repeats the above processing for the number of facial expression images (frames), to generate a data set.

In recent years, with the development of deep learning, the importance of improving the efficiency of annotation that efficiently provides label information to a large-scale data set has been increasing. The purpose of improving the efficiency of annotation is to reduce the burden on an annotator and to maintain the quality of obtained label information. If the burden on the annotator increases, the reliability the label information obtained by annotation may degrades due to decrease of concentration at the time of annotating.

Further, a method is known that improves the efficiency of annotation by aggregating data to be learned. Furthermore, a method is known that uses a reaction of an annotator as it is for learning. As a method of adding a reaction of an annotator to label information when annotating the label information to be paired with video, a region to which the annotator responds to is identified by using line-of-sight information, for example. With this configuration, efficient learning is performed even with a smaller amount of data. In particular, in the case of a task such as adding a label to a target video, a region to which the annotator pays attention in selecting the label is clearly given. Such a configuration saves the annotator from performing a complicated application. Thus, a burden on the annotator is reduced. With such a method, a region of high importance included in a video is extracted, and an annotator directly specifies importance without using an algorithm for calculating importance.

However, in the above-described method, only a portion of a line-of-sight region is used as an input, and a peripheral region around the line-of-sight region is not used. For example, David Whitney, Dennis M. Levi, "Visual crowding: a fundamental limit on conscious perception and object recognition", Trends in cognitive sciences, 2011, 15.4, 160-168 discloses that information of a peripheral region is important in image recognition, as well as information of a central region. Accordingly, it is not appropriate to apply the method using only the line-of-sight region of the annotator to tasks such as object recognition and the facial expression recognition, in which recognition of a peripheral region has significances in addition to recognition of a central region. Accordingly, there is a room for improving efficiency of annotation.

To address such an issue, the learning system 5 uses an interpolation-type learning algorithm using line-of-sight information of an annotator, to implement learning of video based on a central region, which is a line-of-sight region in an input image, and a peripheral region which is a region around the central region.

### Hardware Configuration:

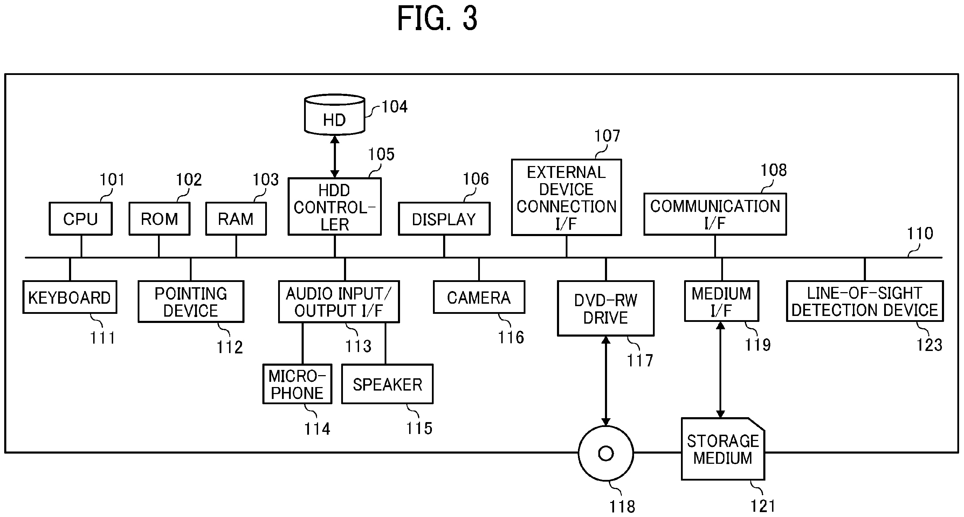

Referring to FIG. 3, an example of a hardware configuration of each of the apparatuses of the nonverbal information processing system 1 are described, according to an embodiment. The apparatuses of the nonverbal information processing system 1 have a configuration of a general-purpose computer. An example of a hardware configuration of the general-purpose computer is described.

FIG. 3 is a block diagram illustrating an example of a hardware configuration of a computer. In one example, the computer in the present embodiment and embodiments described below have the same configuration as illustrated in FIG. 3. In another example, one or more components or elements are added or deleted as needed. The computer includes a central processing unit (CPU) 101, a read only memory (ROM) 102, a random access memory (RAM) 103, a hard disk (HD) 104, a hard disk drive (HDD) controller 105, a display 106, an external device connection interface (I/F) 107, a communication I/F 108, a bus line 110, a keyboard 111, a pointing device 112, an audio input/output I/F 113, a microphone 114, a speaker 115, a camera 116, a digital versatile disk rewritable (DVD-RW) drive 117, a medium I/F 119, and a line-of-sight detection device 123.

The CPU 101 controls overall operation of the computer. The ROM 102 stores a program such as an initial program loader (IPL) to boot the CPU 101. The RAM 103 is used as a work area for the CPU 101. The HD 104 stores various data such as a program. The HDD controller 105 controls reading or writing of various data from or to the HD 104 under control of the CPU 101. The display 106 is an example of a display device (display means) that displays various types of information such as a cursor, a menu, a window, characters, or an image. In one example, the display 106 is a touch panel display provided with an input device (input means). The external device connection I/F 107 is an interface that connects the computer to various extraneous sources. The communication I/F 108 is an interface for data transmission and reception with other computers or electronic devices. The communication I/F 108 is, for example, a communication interface such as a wired or wireless LAN. In another example, the communication I/F 108 includes a communication interface for mobile communication such as 3G, 4G, 5G, or LTE, Wi-Fi^{®}, or WiMAX. The bus line 110 is, for example, an address bus or a data bus, which electrically connects the elements such as the CPU 101 illustrated in FIG. 2.

The keyboard 111 is an example of an input device (input means) including a plurality of keys for inputting characters, numerical values, various instructions, and the like. The pointing device 112 is an example of an input device (input means) that allows a user to select or execute a specific instruction, select an object for processing, or move a cursor being displayed. The keyboard 111 and the pointing device 112 are merely examples of the input device (input means). In another example, a touch panel, a voice input device, or the like is used as the input device (input means). In still another example, instead of or in alternative to the display device (display means) such as the display 106 and the input device (input means) such as the keyboard 111 and the pointing device 112, a user interface (UI) external to the computer is used. The audio input/output I/F 113 is a circuit for inputting or outputting an audio signal between the microphone 114 and the speaker 115 under control of the CPU 101. The microphone 114 is an example of an audio collecting device (audio collecting means), which is a built-in type, that receives an input of audio. The speaker 115 is an example of an output device (output means), which is a built-in type, that outputs an audio signal. The camera 116 is an example of an image capturing device (image capturing means), which is a built-in type, that captures an image of an object to obtain image data. In another example, each of the microphone 114, the speaker 115, and the camera 116 is an external device in alternative to the built-in device of the computer. The DVD-RW drive 117 controls reading or writing of various data to or from a DVD-RW 118, which is an example of a removable storage medium. In another example, the removable storage medium includes at least one of digital versatile disk-recordable (DVD-R) or a Blu-ray^{®} disc, in addition to or in alternative to the DVD-RW. The medium I/F 119 controls reading or writing (storing) of data from or to a storage medium 121 such as a flash memory. The line-of-sight detection device 123 is a sensor device that detects movement of a line of sight of a user who uses the learning apparatus 10. As the line-of-sight detection device 123, an infrared light emitting diode (LED) lighting device and an infrared camera are used, for example. In this case, the infrared LED lighting device of the line-of-sight detection device 123 irradiates the face of the user, to set a position on the cornea of reflected light (corneal reflex) formed by being irradiated by the infrared LED illumination device as a reference point. Further, the line-of-sight detection device 123 detects the line of sight of the user with the infrared camera based on a position of a pupil with respect to the position of the corneal reflex. The line-of-sight detection device 123 as described is merely one example. In another example, any known apparatus capable of performing a general line-of-sight detection method is used.

For example, any one of the above-described control programs is recorded in a file in a format installable or executable on a computer-readable storage medium for distribution. Examples of the storage medium include, but are not limited to, a compact disc-recordable (CD-R), a digital versatile disk (DVD), a Blu-ray^{®} disc, a secure digital (SD) card, and a universal serial bus (USB) memory. In addition, such storage medium may be provided in the form of a program product to users within a certain country or outside that country. For example, the learning apparatus 10 executes a program according to the present invention to implement a nonverbal information learning method according to the present invention.

### Functional Configuration:

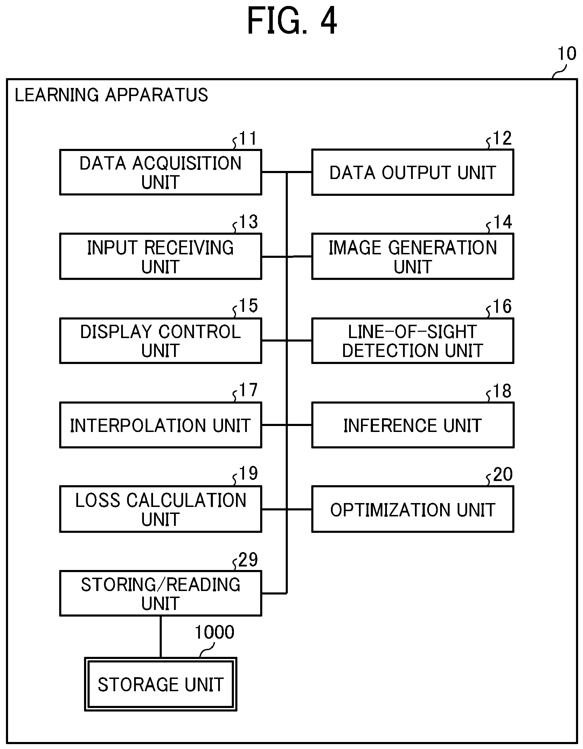

Referring to FIG. 4, a functional configuration of the nonverbal information processing system is described according to an embodiment. FIG. 4 is a block diagram illustrating an example of a functional configuration of the learning apparatus 10. The learning apparatus 10 includes a data acquisition unit 11, a data output unit 12, an input receiving unit 13, an image generation unit 14, a display control unit 15, a line-of-sight detection unit 16, an interpolation unit 17, an inference unit 18, a loss calculation unit 19, an optimization unit 20, and a storing/reading unit 29. These units are functions or means implemented by or that are caused to function by operating any of the hardware elements illustrated in FIG. 3 in cooperation with instructions of the CPU 101 according to the program for the learning apparatus 10 expanded to the RAM 103. The learning apparatus 10 further includes a storage unit 1000 that is implemented by the ROM 102, the HD 104, or the storage medium 121 illustrated in FIG. 3.

The data acquisition unit 11 is implemented mainly by the communication I/F 108 or the external device connection I/F 107 operating under control of the CPU 101. The data acquisition unit 11 acquires various data input from an external apparatus. The data output unit 12 is implemented mainly by the communication I/F 108 or the external device connection I/F 107 operating under control of the CPU 101. The data output unit 12 outputs various data obtained by processing by the learning apparatus 10 to an external apparatus.

The input receiving unit 13 is implemented mainly by the keyboard 111 or the pointing device 112 operating under control of the CPU 101. The input receiving unit 13 receives various selections or inputs from the user. The image generation unit 14, which is implemented mainly by instructions of the CPU 101, generates a facial expression image to be machine-learned, based on video information in which a person appears, the video data being input from an external apparatus. The display control unit 15, which is implemented mainly by instructions of the CPU 101, displays various screens on a display device (display means) such as the display 106.

The line-of-sight detection unit 16 is implemented mainly by the line-of-sight detection device 123 operating under control of the CPU 101. The line-of-sight detection unit 16 detects line-of-sight information indicating a direction of a line of sight of the annotator.

The interpolation unit 17, which is implemented mainly by instructions of the CPU 101, generates an interpolated image based on the facial expression image generated by the image generation unit 14 and the line-of-sight information detected by the line-of-sight detection unit 16.

The inference unit 18, which is implemented mainly by instructions of the CPU 101, estimates label information to be added to the facial expression image based on the interpolated image generated using the facial expression image generated by the image generation unit 14 and the line-of-sight information detected by the line-of-sight detection unit 16.

The loss calculation unit 19, which is implemented mainly by instructions of the CPU 101, calculates a difference between label information whose input is received by the input receiving unit 13 and the label information estimated by the inference unit 18.

The optimization unit 20, which is implemented mainly by instructions of the CPU 101, updates a parameter used for processing by the inference unit 18 based on the difference calculated by the loss calculation unit 19.

The storing/reading unit 29 stores various data (or information) in the storage unit 1000 and/or reads various data (or information) from the storage unit 1000. In the storage unit 1000, a data set used for learning by the learning apparatus 10 and learned learning data are stored. In another example, the storage unit 1000 is configured as one or more storage devices that are external to the learning apparatus 10.

### First Embodiment:

### Overview:

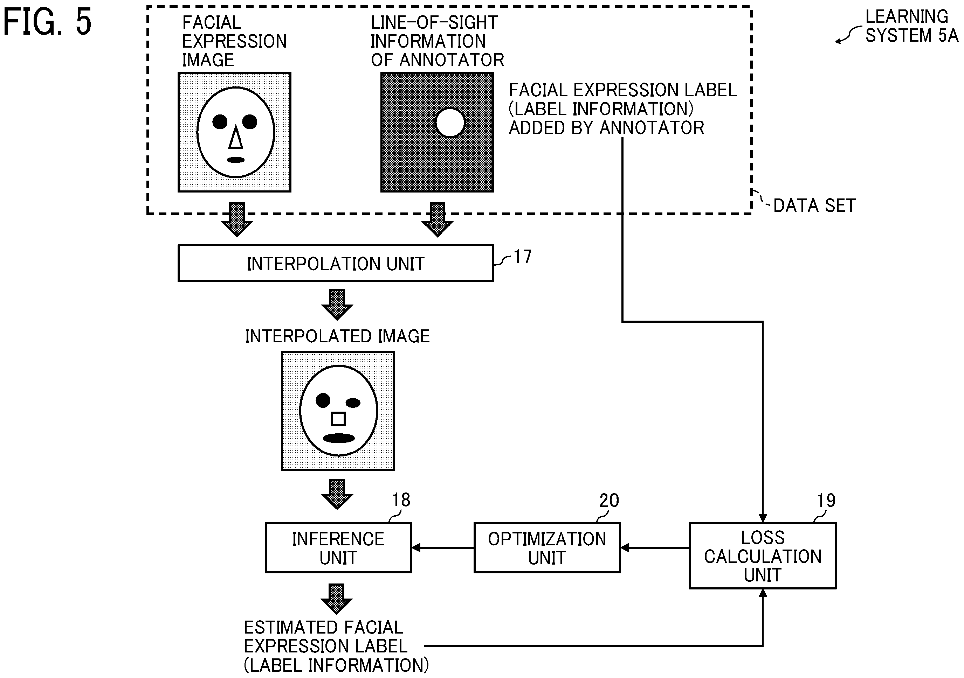

Referring to FIG. 5 to FIG. 11, a learning system 5A is described according to the first embodiment. FIG. 5 is a schematic diagram illustrating an example of the learning system 5A according to the first embodiment. The learning system 5A according to the first embodiment is a system that generates an interpolated image from a facial expression image indicating a face of a certain person and line-of-sight information indicating a direction of a line of sight of an annotator and uses the generated interpolated image for processing by the inference unit 18.

First, the learning system 5A prepares a data set including a facial expression image generated from certain video information, line-of-sight information indicating a direction of a line of sight of an annotator, and label information, which is a facial expression label added to the facial expression image by the annotator. The interpolation unit 17 generates an interpolated image including a central region and a peripheral region by pattern interpolation using the facial expression image and the line-of-sight information as inputs. The central region is the direction of the line of sight (line-of-sight region) in the input facial expression image. The peripheral region is an area around the central region. Then, the inference unit 18 estimates label information, which is a facial expression label to be added to the facial expression image, using the interpolated image generated by the interpolation unit 17 as an input.

Further, the learning system 5A uses a loss calculated by the loss calculation unit 19 based on the label information estimated by the inference unit 18 and the label information added by the annotator, for the parameter update of the inference unit 18 by the optimization unit 20. The loss calculation by the loss calculation unit 19 and the parameter update of the inference unit 18 by the optimization unit 20 are performed in the same or substantially the manner as a general-purpose learning system.

### Processes or Operations of the First Embodiment:

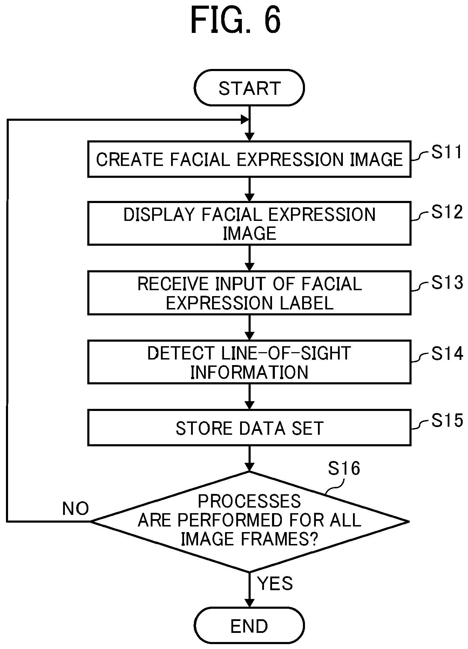

Referring to FIG. 6 to FIG. 11, processes or operation performed by the learning system 5A is described according to the first embodiment. First, referring to FIG. 6, an operation of creating a data set used for learning nonverbal information is described. FIG. 6 is a flowchart illustrating an example of an operation of creating a data set. A description given with reference to FIG. 6 is of an example in which an operation is performed using video information including a plurality of image frames input from an external apparatus. In one example, the video information is a moving image. In another example, video information is a still image.

First, the image generation unit 14 of the learning apparatus 10 generates a facial expression image by using video information in which a person appears, the video information being input from an external apparatus (step S11). Specifically, the image generation unit 14 detects a face of a person from the video information input from the external apparatus and detects landmarks of the face using a method described E. Goeleven, R. De Raedt, L. Leyman, and B. Verschuere, "The Karolinska directed emotional faces: A validation study", Cogn. Emot., vol. 22, no. 6, pp. 1094-1118, 2008, for example. The image generation unit 14 performs left/right tilt correction and size correction using the detected face landmarks. In the left/right tilt correction, for example, the input video information and the detected facial landmarks are rotated so that the heights (y-values) or the left and right eyes are the same. In the size correction, for example, the input video information and the detected face landmarks are enlarged or reduced so that the upper, lower, left, and right poles of the detected face landmarks are within a designated image size.

Next, the display control unit 15 controls a display unit such as the display 106 to display the facial expression image generated in step S11 (step S12). The facial expression image is, for example, a still image expressing the basic six emotions with a face as described in T. Baltrusaitis, P. Robinson, and L. P. Morency, "OpenFace: an open source facial behavior analysis toolkit", IEEE Winter Conf. Appl. Comput. Vision, WACV, 2016.

Next, the input receiving unit 13 receives an input of a facial expression label according to a predetermined input operation performed by the annotator to an input device (input means) such as the keyboard 111 (step S13). For example, the annotator observes the facial expression image displayed in step S12, to input a corresponding facial expression label. The learning apparatus 10 stores the answer input by the input receiving unit 13 as label information indicated by a one-hot vector.

Further, the line-of-sight detection unit 16 detects a direction of a line of sight of the annotator at the time when the input of the facial expression label is received in step S13 (step S14). Specifically, the line-of-sight detection unit 16 detects the direction of the line of sight of the annotator on the display 106 in real time using the line-of-sight detection device 123, for example. In order to improve the estimation accuracy, the line-of-sight detection unit 16 performs calibration at the first detection, to correct the influence of eyeball characteristics and display characteristics, for example. The direction of the line of sight is represented by a pixel position (x, y) of the display 106, and this coordinate information is acquired as line-of-sight information.

Next, the storing/reading unit 29 stores the facial expression image generated in step S12, the label information input in step S13, and the line-of-sight information indicating the direction of the line of sight detected in step S14 in the storage unit 1000 as one data set (step S15). Then, in a case that the learning apparatus 10 performs the above processes on all of image frames for the input video information (YES in step S16), the operation ends. By contrast, there is a frame on which the above processes are not yet performed (NO in step S16), the learning apparatus 10 repeats the processes from step S11 until the processes are performed on all of image frames for the input video information.

As described, the learning system 5A generates, as preprocessing of learning, the data set, which is a set of the facial expression image representing the face of the certain person, the line-of-sight information indicating the direction of the line of sight of the annotator, and the label information input by the annotator.

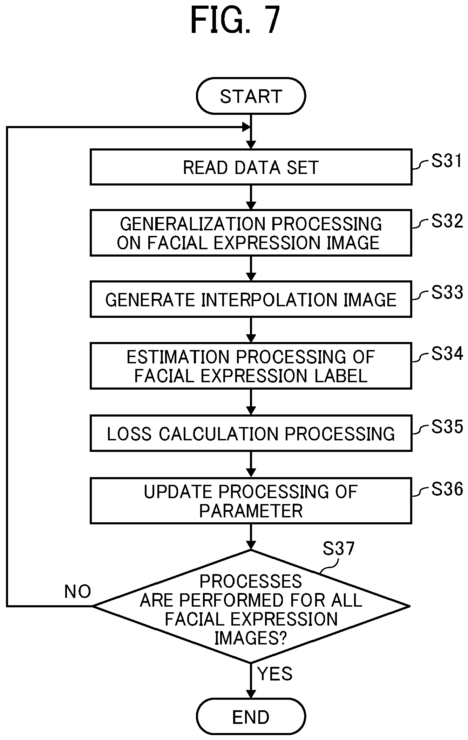

Next, referring to FIG. 7 to FIG. 11, an operation of learning nonverbal information performed by the learning apparatus 10 is described. FIG. 7 is a flowchart illustrating an example of an operation of learning nonverbal information.

First, the storing/reading unit 29 of the learning apparatus 10 reads a data set generated by the processes described above with reference to FIG. 6 (step S31).

Next, the interpolation unit 17 performs generalization processing on the facial expression image included in the data set read in step S31 (step S32). For example, the interpolation unit 17 generalizes the facial expression image using a pre-learned variational auto-encoder (VAE), to reproduce pattern interpolation in which a peripheral region is generated. Then, the interpolation unit 17 generates an interpolated image using the generalized image obtained by the generalization processing in step S32 and the facial expression image read in step S31 (step S33). For example, the interpolation unit 17 generates the interpolated image by combining the generalized image and the facial expression image by weighted addition using the line-of-sight information read in step S31.

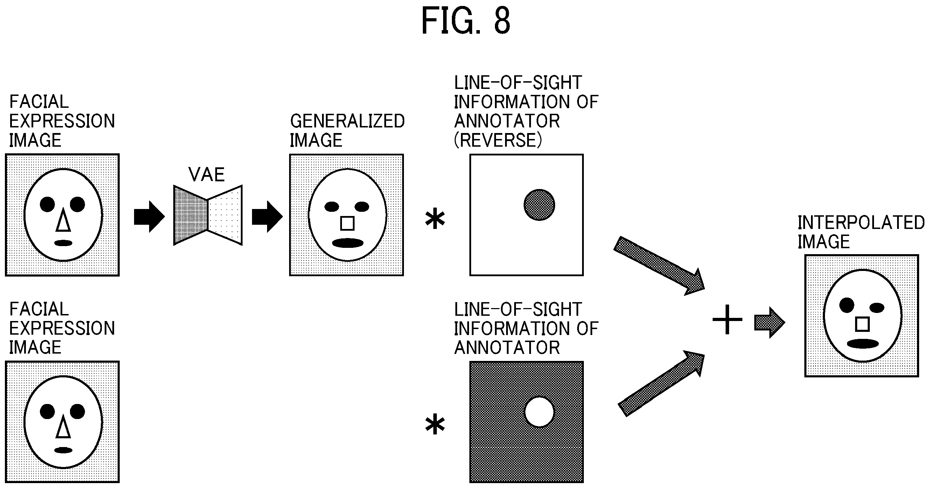

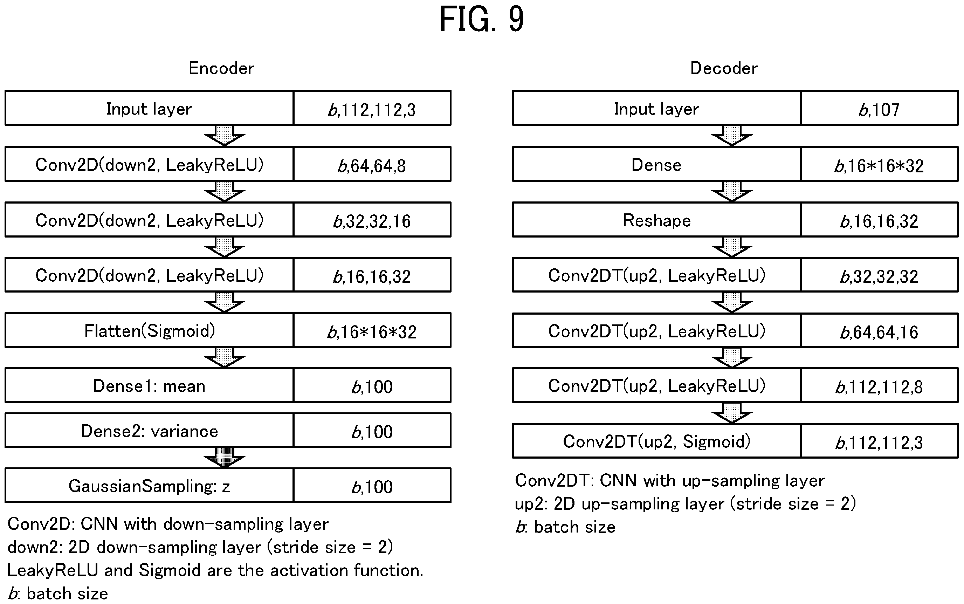

Referring to FIG. 8 and FIG. 9, the pattern interpolation processing performed by the interpolation unit 17 is described. FIG. 8 is a schematic diagram illustrating an example of an operation performed by the interpolation unit 17. The concept of the pattern interpolation processing by the interpolation unit 17 is based on a human's characteristic that when one views a facial expression image, he/she perceives a line-of-sight region (central region) as it is and perceives a peripheral region by stimulating information (pattern interpolation) interpolated by memory. In FIG. 8, "^{∗}" represents integration for each pixel, and "+" represents addition for each pixel. Further, a white portion of the line-of-sight information illustrated in FIG. 8 represents "1", and a colored portion of the line-of-sight information represents "0". The pattern interpolation is reproduced by generalizing the facial expression image with the VAE learned in advance. The generalized image and the facial expression image are combined by weighted addition using the line-of-sight information of the annotator, and the combined image is an interpolated image.

FIG. 9 is a schematic diagram illustrating an example of pre-learning by the VAE. The VAE is a deep neural network (DNN) having functions of generalization and interpolation. FIG. 9 illustrates details of a structure of the VAE. An input to Encoder illustrated in FIG. 9 is a facial expression image, and an output from the encoder is a latent vector. An input to Decoder illustrated in FIG. 9 is a latent vector, and the output from the decoder is a generalized image. The VAE learns in advance a difference between the input and the output as a loss by using the facial expression image. The VAE performs learning that does not depend on the environment and a position of a face by inputting the preprocessed data as described referring to step S11 of FIG. 6.

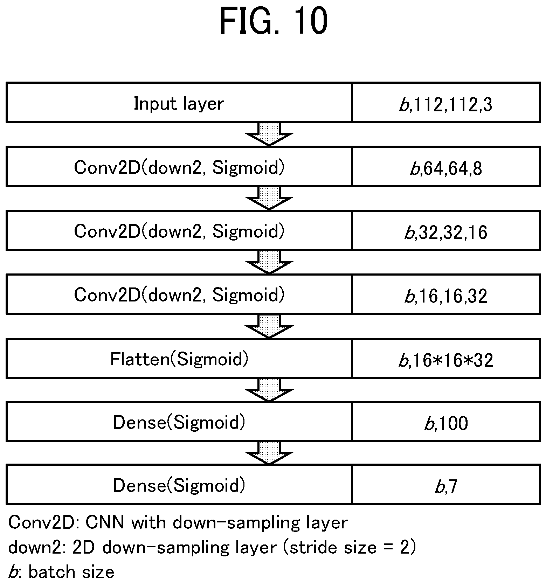

Referring again to FIG. 7, the inference unit 18 performs estimation processing of a facial expression label based on the interpolated image generated in step S33 (step S34). Specifically, the inference unit 18 estimates label information, which is a facial expression label to be added to the facial expression image that is read in step 31 using the interpolated image generated by the interpolation unit 17 as an input. FIG. 10 is a conceptual diagram illustrating an example of a structure of the inference unit 18. The inference unit 18 is a machine learning model that handles general images. An input to the inference unit 18 illustrated in FIG. 10 is the interpolated image, and the output from the inference unit 18 is the facial expression label (label information) indicated by a one-hot vector. Further, the facial expression label output from the inference unit 18 is 7-bit data in which neutral is added to the basic six emotions. The inference unit 18 executes processing corresponding to various tasks such as object recognition, person recognition, facial expression recognition, emotion recognition, and intention recognition on the input interpolated image, to estimates the facial expression label.

Next, the loss calculation unit 19 calculates a difference between the label information (an example of first label information) read in step S31 and the label information (an example of second label information) estimated in step S34 (step S35). Specifically, the loss calculation unit 19 calculates a difference between the label information added by the annotator and the label information, which is the facial expression label estimated by the inference unit 18, as a loss by the cross-entropy loss.

Next, the optimization unit 20 updates a parameter used for the processing by the inference unit 18 based on the difference calculated in step S35 (step S36). Specifically, the optimization unit 20 updates the parameter used for the processing by the inference unit 18 based on a predetermined optimization method using the loss obtained in the processing by the interpolation unit 17 and the inference unit 18. As the optimization method, a method generally used in machine learning is used.

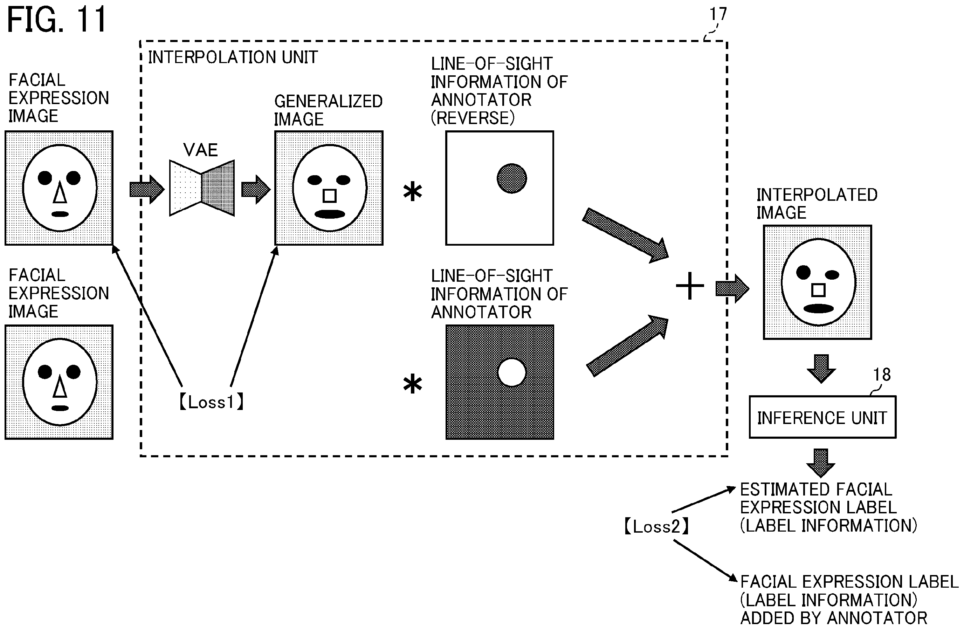

FIG. 11 is a schematic diagram illustrating an example of update processing of a parameter used for processing by the inference unit 18. "Loss 1" illustrated in FIG. 11 indicates a loss obtained in the processing by the interpolation unit 17. Specifically, the "Loss1" indicates a difference between the facial expression image read in step S31 and the generalized image obtained by the generalization processing by the interpolation unit 17. "Loss2" illustrated in FIG. 11 indicates a loss calculated by the loss calculation unit 19. The optimization unit 20 updates a parameter used for the processing by the inference unit 18 based on the "Loss1" and "Loss2". In another example, the optimization unit 20 updates a parameter used for processing by the interpolation unit 17 as well as the parameter used for processing by the inference unit 18.

Then, in a case that the learning apparatus 10 performs the above processes on all of the facial expression images read in step S31 (YES in step S37), the operation ends. By contrast, there is a remaining facial expression image on which the above processes are not yet performed (NO in step S37), the learning apparatus 10 repeats the processes from step S32 until the processes are performed on all of the read facial expression images. In one example, the learning apparatus 10 performs the operation illustrated in FIG. 7 for several epochs. One epoch corresponds to repeating the operation for the number of the facial expression images. In another example, the learning apparatus 10 performs the operation illustrated in FIG. 7 until the amount of decrease in the loss calculated by the loss calculation unit 19 is equal to or less than a predetermined value.

As described, the learning system 5A according to the first embodiment performs learning using the interpolated image generated by pattern interpolation based on the input facial expression image and line-of-sight information in an interpolation-type learning algorithm using line-of-sight information of an annotator. With this configuration, learning based on the central region and the peripheral region in the input facial expression image is efficiently implemented.

### Second Embodiment:

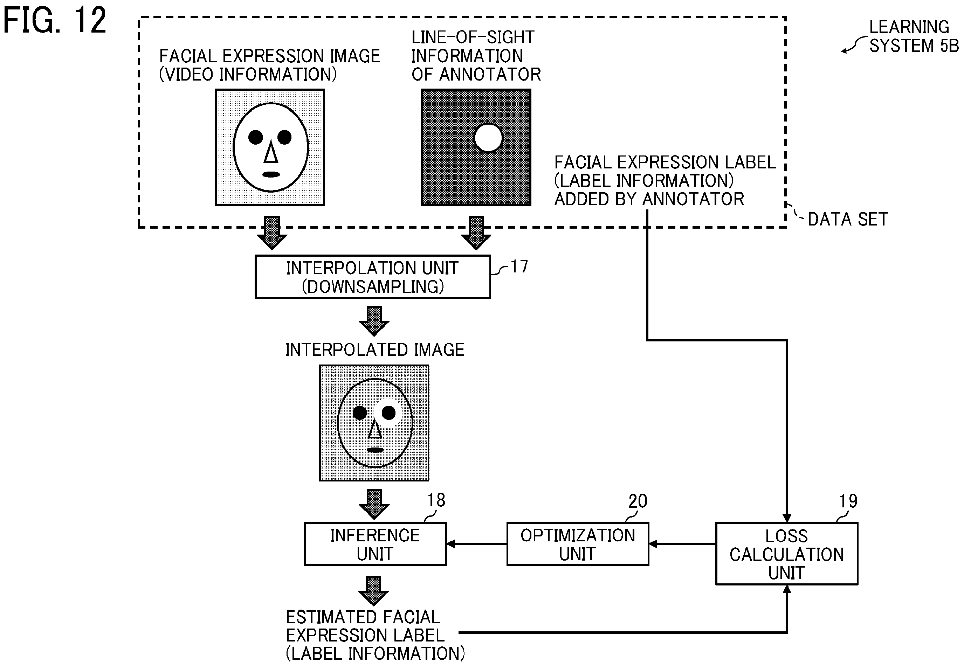

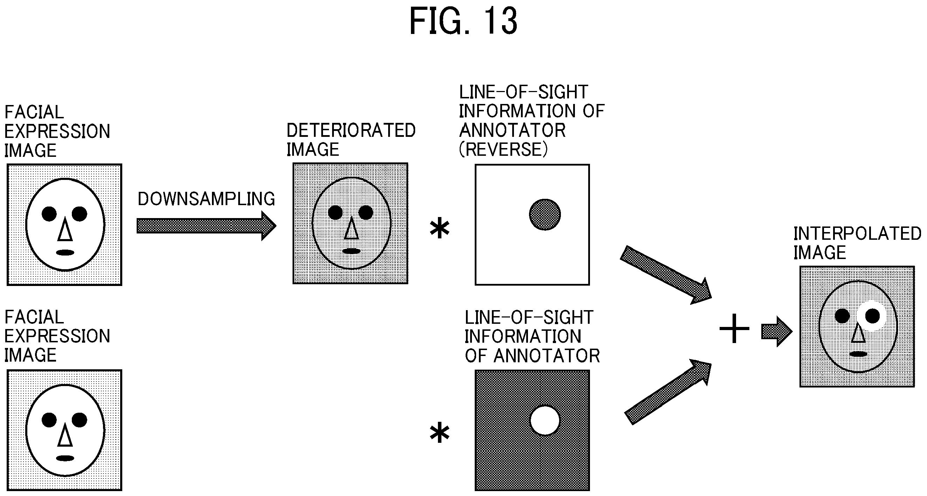

Referring to FIG. 12, and FIG. 13, a learning system 5B is described according to the second embodiment. The same configurations and the same functions as those in the above-described embodiments are denoted by the same reference numerals, and redundant descriptions thereof are omitted below. FIG. 12 is a schematic diagram illustrating an example of the learning system 5B according to the second embodiment. The learning system 5B according to the second embodiment is different from the learning system 5A according to the first embodiment in that the interpolation unit 17 performs processing in a different way. The learning system 5B according to the second embodiment performs the generalization processing of the facial expression image in step S32 by deterioration processing by down-sampling instead of pattern interpolation.

FIG. 13 is a schematic diagram illustrating an example of an operation performed by the interpolation unit 17, according to the second embodiment. As illustrated in FIG. 13, the interpolation unit 17 compresses the facial expression image read in step S31 by a factor of 1/2, and then enlarges the compressed image by a factor of 2 (linear interpolation), to blur the facial expression image. Thus, down-sampling is implemented in which the peripheral region is generated . A deteriorated image and an interpolated image illustrated in FIG. 13 represent an image obtained by reducing the facial expression image by a factor of 1/2 and then enlarging the reduced image by a factor of 2. As described above referring to FIG. 8, "^{∗}" illustrated in FIG. 13 represents integration for each pixel, and "+" represents addition for each pixel. Further, as described above referring to FIG. 8, a white portion of the line-of-sight information illustrated in FIG. 13 represents "1", and a colored portion of the line-of-sight information represents "0". Furthermore, the interpolation unit 17 generates an interpolated image using the deteriorated image obtained by the deterioration processing and the read facial expression image.

As described, the learning system 5B according to the second embodiment performs learning using the interpolated image generated by down-sampling based on the input facial expression image and line-of-sight information. With this configuration, learning based on the central region and the peripheral region in the input facial expression image is efficiently implemented.

### Third Embodiment:

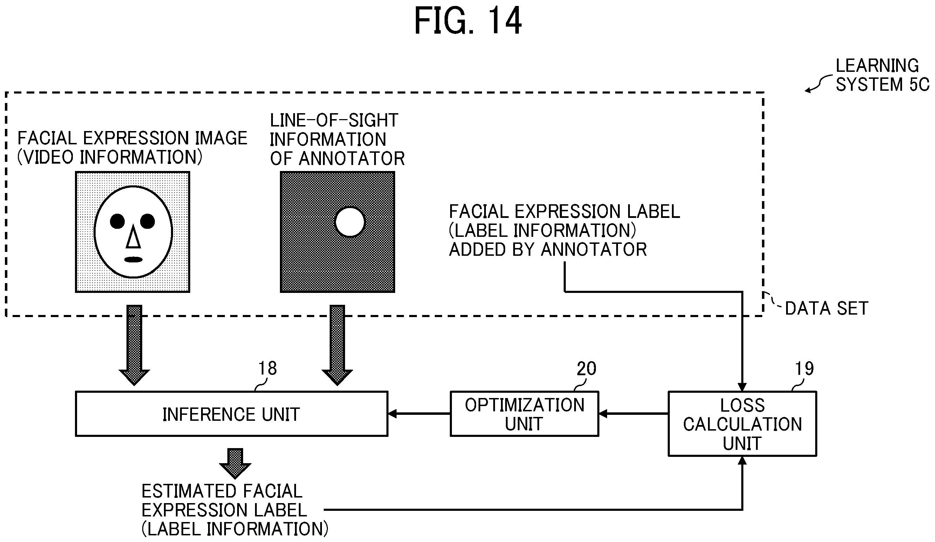

Referring to FIG. 14 to FIG. 17, a learning system 5C is described according to the third embodiment. The same configurations and the same functions as those in the above-described embodiments are denoted by the same reference numerals, and redundant descriptions thereof are omitted below. FIG. 14 is a schematic diagram illustrating an example of the learning system 5C according to the third embodiment. The learning system 5C according to the third embodiment is different from the learning system 5A according to the first embodiment in that the inference unit 18 performs processing in a different way. In the learning system 5C according to the third embodiment, the processing by the interpolation unit 17 described above in the first and second embodiments is omitted, and filtering processing by the inference unit 18 is performed based on the facial expression image and the line-of-sight information.

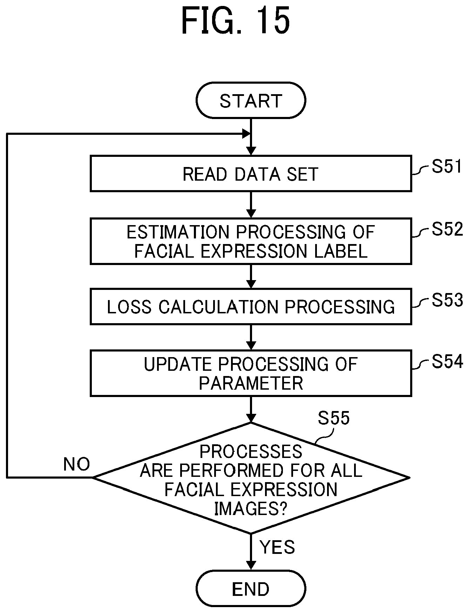

FIG. 15 is a flowchart illustrating an example of an operation of learning nonverbal information according to the third embodiment. In the learning system 5C, the creation of a data set is performed in the same or in substantially the same manner as described above referring to FIG. 6 in the above embodiment.

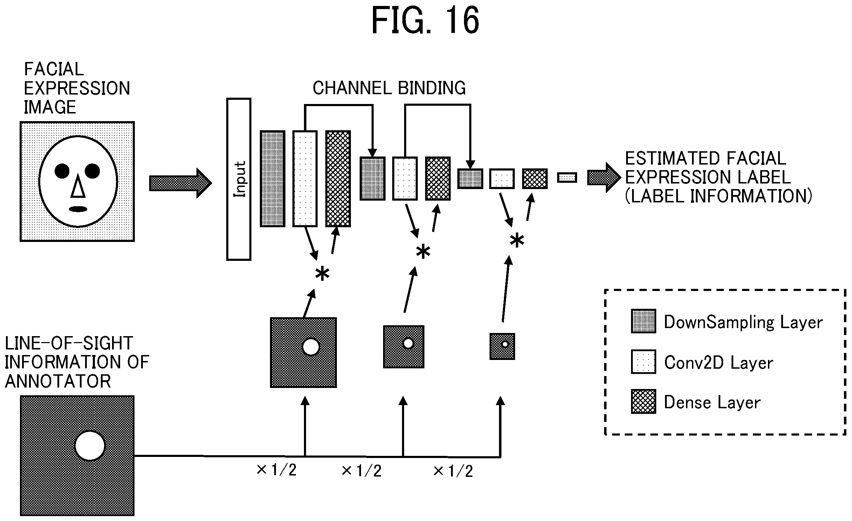

First, the storing/reading unit 29 of the learning apparatus 10 reads a data set generated by the processes described above with reference to FIG. 6 (step S51). Next, the inference unit 18 performs estimation processing of a facial expression label based on the facial expression image and the line-of-sight information included in the data set read in step S51 (step S52). FIG. 16 is a schematic diagram illustrating an example of an operation performed by the inference unit 18, according to the third embodiment. As illustrated in FIG. 16, the inference unit 18 performs each layer filtering processing using the facial expression image and the line-of-sight information as inputs. "^{∗}" illustrated in FIG. 16 represents integration for each pixel for all channels. Further, a white portion of the line-of-sight information illustrated in FIG. 16 represents "1", and a colored portion of the line-of-sight information represents "0".

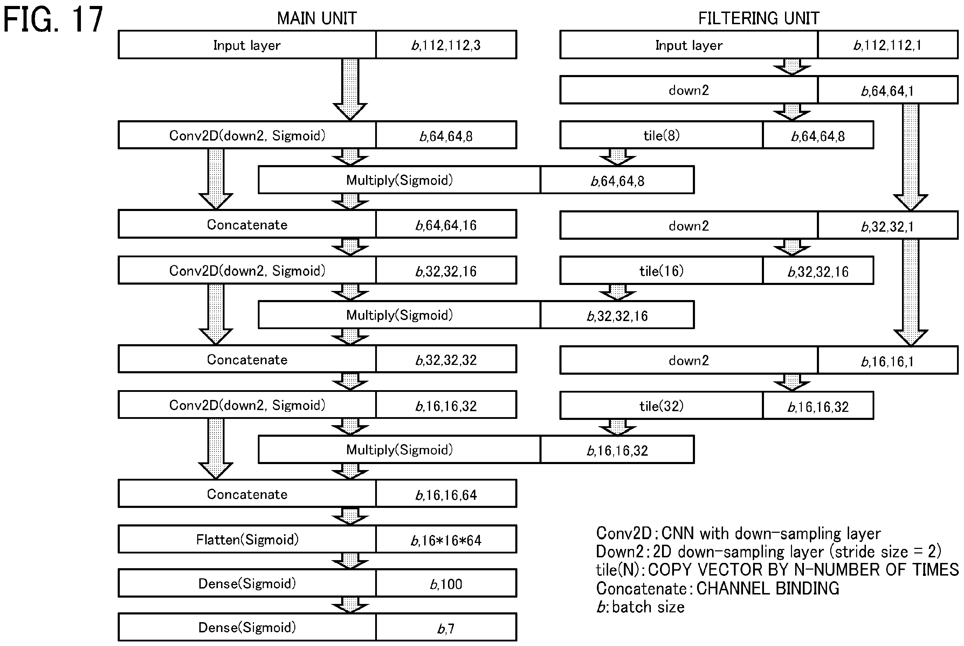

FIG. 17 is a schematic diagram illustrating an example of a structure of the inference unit 18, according to the third embodiment. An input to a main unit illustrated in FIG. 17 is the facial expression image, and an output from the main unit is the facial expression label (label information). An input to a filtering unit illustrated in FIG. 17 is the line-of-sight information. The inference unit 18 performs convolution of the line-of-sight information down-sampled by the filtering unit as illustrated in FIG. 16 with the output from each feature extraction layer (e.g., the DownSampling layer, Conv2D layer, and Dense layer illustrated in FIG. 16) of the main unit. Further, in feature extraction of the next layer, the inference unit 18 uses an output obtained by performing channel binding of the previous layer before the convolution and after convolution as an input, as illustrated in FIG. 16.

The inference unit 18 performing such layer filtering processing to estimate a facial expression label (label information) to be added to the read facial expression image. Processes from step S53 to step S55 are performed in the same or substantially the same manner as described above referring to step S35 to step S37 of FIG. 7, and the redundant descriptions are omitted.

As described, the learning system 5C according to the third embodiment performs estimation of label information based on a result of each layer filtering processing based on the input facial expression image and line-of-sight information. With this configuration, learning based on the central region and the peripheral region in the input facial expression image is efficiently implemented.

As described, the learning system 5 uses an interpolation-type learning algorithm using line-of-sight information of an annotator, to implement learning of video based on a central region, which is a line-of-sight region in an input image, and a peripheral region which is a periphery of the central region. Further, the learning system 5 implements efficient annotation based on the line-of-sight region and the peripheral region in an input image by using an interpolation type learning algorithm using line-of-sight information of an annotator.

The functionality of the elements disclosed herein may be implemented using circuitry or processing circuitry which includes general purpose processors, special purpose processors, integrated circuits, application specific integrated circuits (ASICs), digital signal processors (DSPs), field programmable gate arrays (FPGAs), system on a chips (SOCs), graphics processing units (GPUs), conventional circuitry and/or combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

Although the learning apparatus, the learning system, the nonverbal information learning method, and the program according to embodiments of the present invention have been described above, the above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

Any one of the above-described operations may be performed in various other ways, for example, in an order different from the one described above.

The input receiving unit 13 is an example of input receiving means. The line-of-sight detection unit 16 is an example of line-of-sight detection means. The interpolation unit 17 is an example of interpolation means. The inference unit 18 is an example of inference means. The loss calculation unit 19 is an example of loss calculation means. The optimization unit 20 is an example of optimization means.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A learning apparatus (10) that performs machine learning using line-of-sight information of an annotator, the learning apparatus comprising:
input receiving means (13) for receiving an input of first label information to be given to a facial expression image indicating a face of a person;
inference means (18) for estimating second label information to be given to the facial expression image based on an interpolated image generated using the facial expression image and line-of-sight information indicating a direction of a line of sight of the annotator, the direction being detected at a time when the input is received;
loss calculation means (19) for calculating a difference between the first label information of which the input is received and the estimated second label information; and
optimization means (20) for updating a parameter used for processing by the inference means (18) based on the calculated difference.

2. The learning apparatus (10) of claim 1, wherein the inference means (18) performs each layer filtering to generate the interpolated image, and estimates the second label information based on the generated interpolated image.

3. The learning apparatus (10) of claim 1, further comprising interpolation means (17) for generating the interpolated image by pattern interpolation based on the facial expression image and the line-of-sight information, wherein
the inference means (18) estimates the second label information based on the interpolated image generated by the interpolation means (17).

4. The learning apparatus (10) of claim 3, wherein the interpolation means (17) generates the interpolated image by down-sampling based on the facial expression image and the line-of-sight information.

5. The learning apparatus (10) of any one of claims 1 to 4, wherein the interpolated image includes a line-of-sight region indicated by the line-of-sight information and a peripheral region, which is a region around the line-of-sight region.

6. The learning apparatus (10) any one of claims 1 to 5, further comprising line-of-sight detection means (16) for detecting the line-of-sight information indicating the direction of the line of sight of the annotator in response to receiving the input, wherein
the inference means (18) estimates the second label information based on the interpolated image generated based on the facial expression image and the line-of-sight information detected by the line-of-sight detection means (16).

7. The learning apparatus (10) of any one of claims 1 to 6, wherein the inference means (18) estimates the second label information by processing of object recognition, person recognition, facial expression recognition, emotion recognition, and intention recognition on the interpolated image.

8. The learning apparatus (10) of any one of claims 1 to 7, wherein the inference means (18) estimates the second label information for each of image frames included in input video information.

9. The learning apparatus (10) of any one of claims 3 to 8, wherein the optimization means (20) updates a parameter used for processing by the interpolation means (17) based on the difference calculated by the loss calculation means (19).

10. A learning system (5, 5A, 5B, 5C) that performs machine learning using line-of-sight information of an annotator, the learning system comprising:
the learning apparatus (10) of claim 1; and
storage means (1000) for storing the facial expression image and the first label information as one data set.

11. A nonverbal information learning method, the method comprising:
receiving (S13) an input of first label information to be given to a facial expression image indicating a face of a person;
estimating (S34) second label information to be given to the facial expression image based on an interpolated image generated using the facial expression image and line-of-sight information indicating a direction of a line of sight of an annotator, the direction being detected at a time when the input is received;
calculating (S35) a difference between the first label information of which the input is received and the estimated second label information; and
updating (S36) a parameter used for processing by the estimating based on the calculated difference.

12. Carrier means carrying computer readable codes for controlling a computer system to carry out a nonverbal information learning method of claim 11.
